# EUROPEAN PATENT SPECIFICATION

(11) **EP 3 098 677 B1**
(45) Date of publication and mention of the grant of the patent: **08.05.2019**
(21) Application number: 15169448.6
(22) Date of filing: 27.05.2015
(51) Int. Cl.: G05B 19/4097

(54) **METHOD FOR MACHINING A COMPONENT ON A MULTI-AXIS MACHINE TOOL DRIVEN BY AN NC-CONTROLLER AND APPARATUS FOR CONDUCTING SAID METHOD**
VERFAHREN ZUR BEARBEITUNG EINES BAUTEILS AUF EINER MEHRACHSIGEN WERKZEUGMASCHINE, DIE DURCH EINEN NC-CONTROLLER ANGESTEUERT WIRD, UND VORRICHTUNG ZUR DURCHFÜHRUNG DES VERFAHRENS
PROCEDE D'USINAGE D'UNE PIECE SUR UNE MACHINE-OUTIL A PLUSIEURS AXES ENTRAINES PAR UN CONTROLEUR NC ET APPAREIL POUR LA MISE EN UVRE DUDIT PROCEDE

(43) Date of publication of application: 30.11.2016
(73) Proprietor: Ansaldo Energia IP UK Limited, London W1G 9DQ (GB)
(72) Inventor: Fenkl, Hartmut, 8280 Kreuzlingen (CH); Hähnle, Hartmut, 79790 Küssaberg (DE)
(74) Representative: Bernotti, Andrea

(56) References cited:
- EP-A1- 1 129 813
- EP-A1- 2 166 125
- US-A1- 2004 083 024
- US-A1- 2015 090 392
- US-B2- 8 442 665

## Description

### BACKGROUND OF THE INVENTION

The present invention relates to the process of machining a component. It refers to a method for machining a component on a multi-axis machine tool driven by an NC-controller.

It further refers to an apparatus for conducting such method.

### PRIOR ART

The machining of e.g. turbine blades (e.g. during reconditioning, but also for preparation of subsequent manufacturing steps) is today done with either information on nominal geometry (-> standard machining) or information on nominal and actual geometry (-> adaptive machining).

For parts or components that are produced from graded material or from different material layers (e.g. base material plus one or more coating layers), the detection of the surface material (material composition/chemical elements) is today often done visually, sometimes also in an analysis step requiring specific equipment with either destructive or non-destructive methods.

The information on the actual layer material composition however can be essential to control material removal (e.g. by milling, grinding, EDM, laser ablation, or the like) and/or material addition (e.g. by laser cladding, selective laser melting, or the like).

State of the art adaptive machining processes make use of geometrical information (nominal and measured) to create a tool path for the machining tool. This is done with commercially available software packages (e.g. from DELCAM).

Adaptive machining is described in various documents.

For example, document US 8,578,579 B2 discloses a method of repair including removing a deformed portion of a component to define a native component portion and adding a replacement portion to the native component portion. The replacement portion is adaptively machined based on one or more parameters of the native component portion and based on one or more original design parameters of the component.

Document US 8,442,665 B2 discloses a system including a three-dimensional object having a non-conforming region, and a photogrammetry device adapted to scan the three-dimensional object. The system further includes optical reference targets and a controller structured to perform functions of repairing the three-dimensional object. The controller commands the photogrammetry device to scan the three-dimensional object, and calculates a nominal surface location and contour for the three-dimensional object. The controller further commands the photogrammetry device to scan the non-conforming region of the three-dimensional object, and calculates a material removal tool path comprising a path adapted to remove material from the object located beyond the nominal surface location and contour. The controller generates a solid model of the damaged region of the object based on the nominal surface location and contour, and computes a material addition tool path according to the solid model.

Document US 2011276166 A1 discloses a method and system for modifying a substrate, such a thin film, solar panel or the like detects error and/or variance and, if needed, re-optimizes the product design and/or process parameters on the fly, so that product can meet the product specification. This allows for methods and systems of process control that can adaptively change the product design in real time.

Document US 2013158698 A1 relates to a fabrication processing system of CIGS thin film solar cell, more particularly to a fabrication processing system CIGS of thin film solar cell equipped with real-time analysis facilities for profiling the elemental components of CIGS thin film using laser-induced breakdown spectroscopy. The system is to provide a process control system for determining whether abnormalities are present or not by measuring physical and chemical properties on continuous production process lines of CIGS thin film solar cell in real time, and performing a production and quality management at the same time by providing a feedback to CIGS fabrication process.
Other solutions relating to machining/reworking processes are disclosed in documents US 2015/090392 and EP 2166125.

However, it would be highly advantageous to include information about the (varying) local material compositions of a component to be machined in the machining process in order to optimize removal and/or deposit of material in certain surface areas of said component.

One means of detecting material composition is spectroscopy.

However, such spectrometers are today not provided for use inside a machine tool.
In general, the information on chemical composition (measured with a spectrometer) is today not used for adaptive manufacturing processes.

### SUMMARY OF THE INVENTION

It is an object of the present invention to integrate a spectroscopy device into the machining process on a multi-axis machine tool driven by an NC-controller.

It is another object of the present invention to provide a material data capture and analysis process and its feed-back into an adaptive tool path generation.

These and other objects are obtained by a method according to Claim 1 and an apparatus according to Claim 12.

According to the invention a method for machining a component on a multi-axis machine tool driven by an NC-controller comprises the steps of:
a) inserting said component into said machine tool;
b) fixing said component in said machine tool with a surface to be machined being reachable by a tool of said machine tool;
c) mapping the material composition on said surface of said inserted and fixed component by means of a spectroscopy tool;
d) determine areas for removing material from or adding material to said component having regard to said mapped material composition;
e) determine a tool path for removing material from or adding material to said component; and
f) removing material from or adding material to said component in said determined areas along said determined tool path by means of said machine tool.

An embodiment of the inventive method is characterized in that a raster with a plurality of defined or arbitrary raster points is provided for said surface of said component to be machined, and that said material composition of said component is mapped at said raster points of said raster.

Another embodiment of the inventive method is characterized in that said step of removing material from said component comprises one of grinding, milling, Electrical Discharge Machining (EDM), or other material-removing process.

A further embodiment of the inventive method is characterized in that said step of adding material to said component comprises Laser Metal Forming (LMF), or other material-additive process.

Especially, said raster with said plurality of raster points is defined on the basis of a CAD model of said component.

Alternatively, said raster with said plurality of raster points is based on a scan of the geometry of said component.

Just another embodiment of the inventive method is characterized in that steps (c) to (f) are rerun at least one time with the same or a different tool.

A further embodiment of the inventive method is characterized in that said component is a part of a gas turbine.

Especially, said component is a turbine blade.

Another embodiment of the inventive method is characterized in that said said spectroscopy tool is mounted in a fixed position inside said machine tool.

Alternatively, said machine tool is equipped with a tool changer, and that said spectroscopy tool is provided in said tool changer of said machine tool.

The apparatus according to the invention for conducting the inventive method comprises a multi-axis machine tool driven by an NC-controller with tools for removing material from or adding material to a component inserted into and fixed in said machine tool. It is characterized in that a spectroscopy tool is provided at said machine tool for mapping the material composition on a surface of said inserted and fixed component.

An embodiment of the apparatus according to the invention is characterized in that said spectroscopy tool is mounted in a fixed position inside said machine tool.

Alternatively, said machine tool is equipped with a tool changer, and said spectroscopy tool is provided in said tool changer of said machine tool.

### BRIEF DESCRIPTION OF THE DRAWINGS

The present invention is now to be explained more closely by means of different embodiments and with reference to the attached drawings.
- Fig. 1: shows, in a flow chart, various steps of a machining process according to an embodiment of the invention;
- Fig. 2: shows a turbine blade with a surface raster as an exemplary component to be machined by the inventive machining process;
- Fig. 3a-d: shows various states of the turbine blade of Fig. 2 during a machining process according to an embodiment of the invention; and
- Fig. 4: shows an embodiment of an apparatus with spectroscopic capabilities according to the invention.

### DETAILED DESCRIPTION OF DIFFERENT EMBODIMENTS OF THE INVENTION

The present invention uses material identification inside a machine tool in an adaptive manufacturing process.

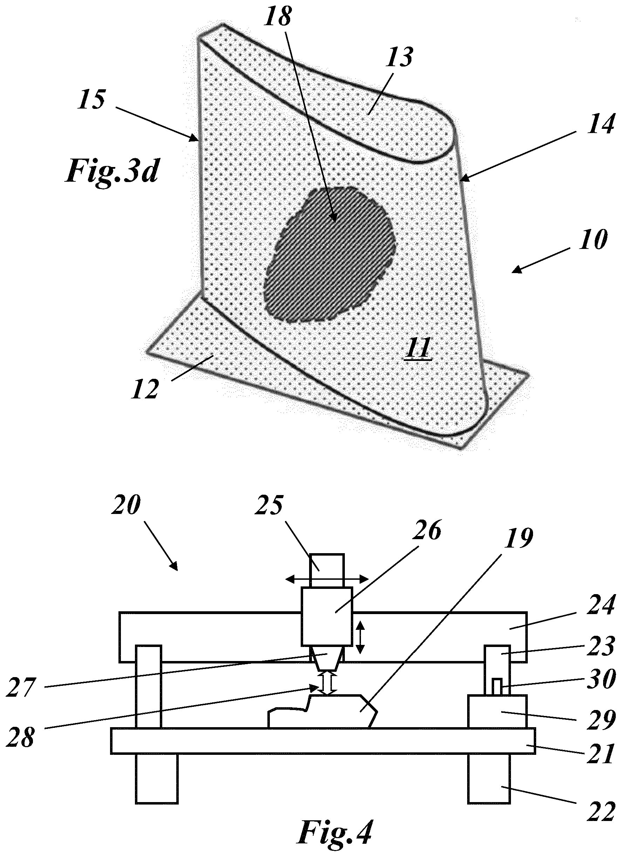

As shown in Fig. 4, a spectroscopy tool (or device) 27 is implemented as an aggregate into a multi-axis machine tool 20 driven by an NC-controller, wherein a component 19 to be machined is inserted and fixed on a table 21. Table 21 is supported by mounting feet 22. A tool holder 26 is movable in vertical direction on a vertical carriage 25, which carriage 25 can be moved in a first horizontal direction along a cross beam 24. Cross beam 24 can be moved in a second horizontal direction on rails 23. Additional axes of rotation may be provided. Machine tool 20 is further equipped with a tool changer 29 containing various machining tools 30.

Fig. 4 further shows a spectroscopy tool 27 held by tool holder 26 in order to determine the material composition on a surface of component 19 by means of a spectroscopy beam 28. This configuration enables an adaptive manufacturing process, wherein material interfaces or material composition may be detected and this information is used for defining the machining process and/or tool path.

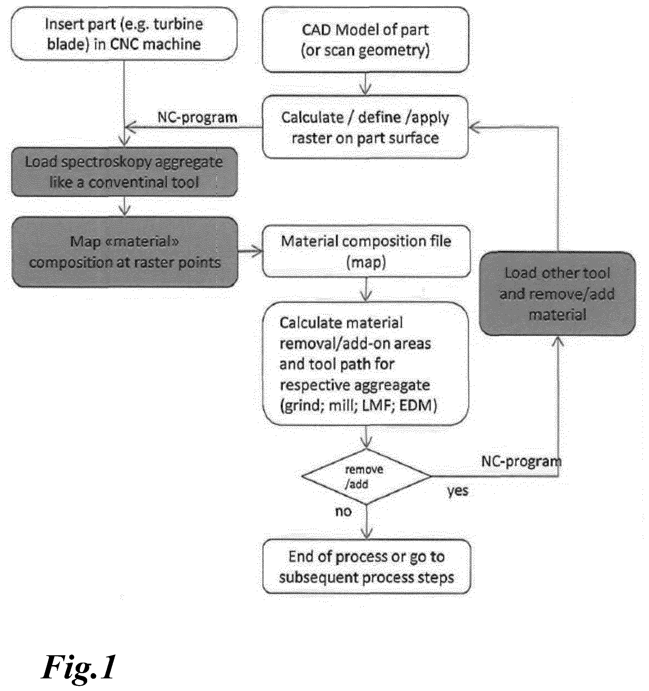

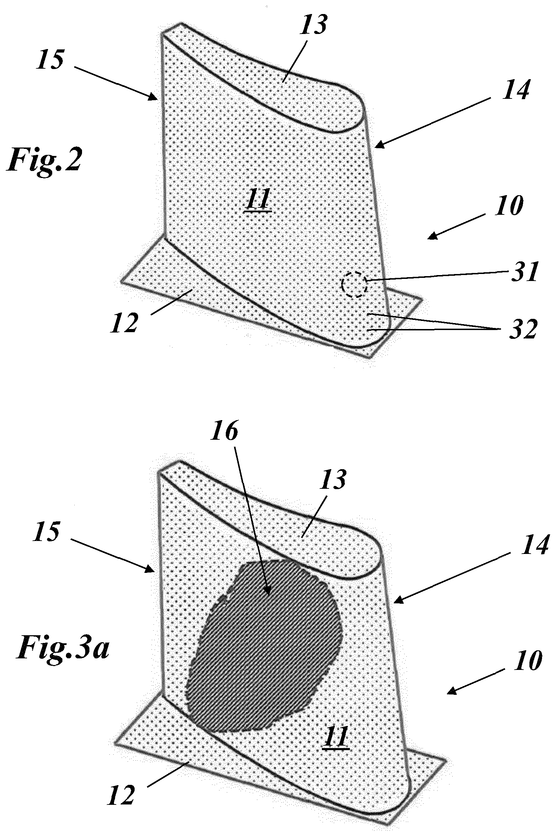

With such a configuration a machining process can be realized in accordance with Fig. 1:
First of all, the part or component 19 to be machined (e.g. a turbine blade 10 as shown in Fig. 2) is inserted into the machine tool 20 (here named "CNC machine") and fixed on table 21 or an equivalent fixture. Turbine blade 10 of Fig. 2 comprises an airfoil 11 with a leading edge 14 and a trailing edge 15. At one end, airfoil 11 ends with a blade tip 13, while a platform 12 is provided at the other end.

In a next step, a spectroscopy tool 27 is used for spectroscopic inspection of the surface of the component 19. The spectroscopy tool is either fixedly mounted on said machine tool 20 or is fetched like a conventional tool from tool changer 29 by tool holder 26. Spectroscopy tool 27 may communicate with the machine control of machine tool 20 either wireless or by wire to transfer the collected material composition data to the central computer system.

Then, the material composition of a surface of component 19 is mapped by means of said spectroscopy tool 27 at certain raster points (32 in Fig. 2) of a raster 31 (Fig. 2). This raster 31 is calculated by the computer system on basis of either a CAD model of component 19 or a geometry scan of said part.

The result of the mapping process is shown in Fig. 3a, where an area 16 is identified and calculated, which contains a material being different from the material outside said area. For example, area 16 may contain a coating layer or a depleted base layer, which must be removed by the subsequent machining process, while the surface outside area 16 contain base material, which doesn't require any removal.

In a next step, material is removed in area 16 by a first material-removing process or step like grinding or milling or Electrical Discharge Machining (EDM), whereby a tool-specific path for the material-removing tool used has been calculated on basis of the identified area 16.

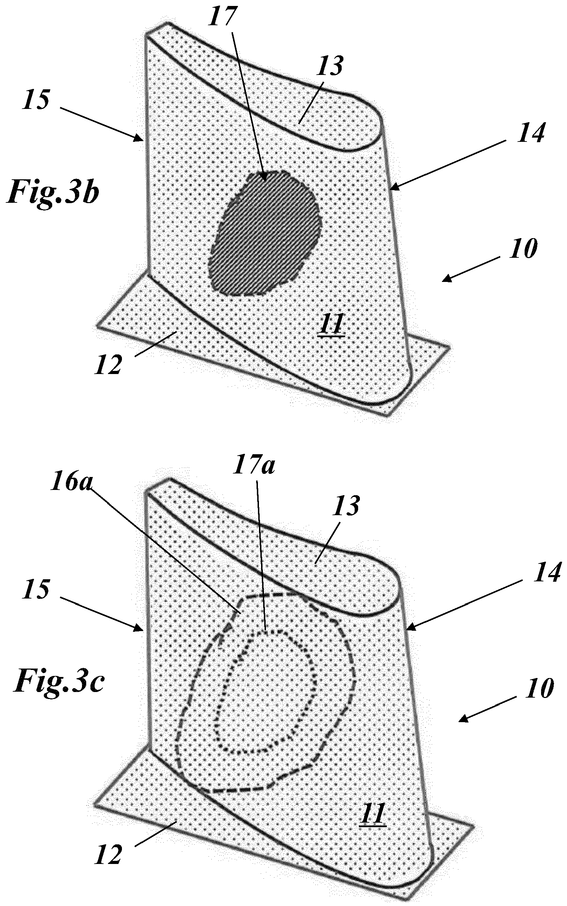

Fig. 3b shows the turbine blade 10 after this first material-removing step, wherein a smaller area 17 of material to be removed remains.

In a next step, the material in area 17 may be completely removed by one or more additional material-removing steps with the same or different tools.

When material removal is finished (Fig. 3c), the computer system still knows the history of material removal with the various area boundaries 16a, 17a, so that new material can be added in one or more iterative add-on steps in accordance with this material-removal history, for example by Laser Metal Forming (LMF), or the like. Turbine blade 10 finally comprises an area 18 of added material (Fig. 3d).

In summary, the present invention uses material detection inside a machine tool and an adaptive tool path generation, resulting in a material-based closed loop manufacturing process. This process allows a precise and fast reworking of a component (material removal and addition), which is
- a pre-requisite for avoiding unnecessary or even detrimental material removal (e.g. by milling, etc.)
- allowing for optimum bonding quality in material addition (e.g. by laser cladding, etc.)

### LIST OF REFERENCE NUMERALS

- 10: turbine blade
- 11: airfoil
- 12: platform
- 13: blade tip
- 14: leading edge
- 15: trailing edge
- 16,17,18: material area
- 16a,17a: area boundary
- 19: component (to be machined, e.g. turbine blade)
- 20: multi-axis machine tool driven by an NC-controller
- 21: table
- 22: mounting foot
- 23: rail
- 24: cross beam
- 25: vertical carriage
- 26: tool holder
- 27: spectroscopy tool
- 28: spectroscopy beam
- 29: tool changer
- 30: machining tool
- 31: raster
- 32: raster point

## Claims

1. Method for machining a component (19) on a multi-axis machine tool driven by an NC-controller (20), comprising the steps of:
a) inserting said component (19) into said machine tool (20);
b) fixing said component (19) in said machine tool (20) with a surface to be machined being reachable by a tool of said machine tool (20);
c) mapping the material composition on said surface of said inserted and fixed component (19) by means of a spectroscopy tool (27);
d) determine areas (16, 17, 18) for removing material from or adding material to said component (19) having regard to said mapped material composition;
e) determine a tool path for removing material from or adding material to said component (19); and
f) removing material from or adding material to said component (19) in said determined areas along said determined tool path by means of said machine tool (20).

2. Method as claimed in Claim 1, **characterized in that** a raster (31) with a plurality of defined or arbitrary raster points (32) is provided for said surface of said component (19) to be machined, and that said material composition of said component (19) is mapped at said raster points (32) of said raster (31).

3. Method as claimed in Claim 1, **characterized in that** said step of removing material from said component (19) comprises one of grinding, milling, Electrical Discharge Machining (EDM), or other material-removing process.

4. Method as claimed in Claim 1, **characterized in that** said step of adding material to said component (19) comprises Laser Metal Forming (LMF), or other material-additive process.

5. Method as claimed in Claim 2, **characterized in that** said raster (31) with said plurality of raster points (32) is defined on the basis of a CAD model of said component (19).

6. Method as claimed in Claim 2, **characterized in that** said raster (31) with said plurality of raster points (32) is based on a scan of the geometry of said component (19).

7. Method as claimed in Claim 1, **characterized in that** steps (c) to (f) are rerun at least one time with the same or a different tool.

8. Method as claimed in Claim 1, **characterized in that** said component (19) is a part of a gas turbine.

9. Method as claimed in Claim 8, **characterized in that** said component (19) is a turbine blade (10).

10. Method as claimed in Claim 1, **characterized in that** said spectroscopy tool (27) is mounted in a fixed position inside said machine tool (20).

11. Method as claimed in Claim 1, **characterized in that** said machine tool (20) is equipped with a tool changer (29), and that said spectroscopy tool (27) is provided in said tool changer (29) of said machine tool (20).

12. Apparatus for conducting the method according to one of the claims 1 to 11, comprising a multi-axis machine tool driven by an NC-controller (20) with tools (30) for removing material from or adding material to a component (19) inserted into and fixed in said machine tool (20), **characterized in that** a spectroscopy tool (27) is provided at said machine tool for mapping the material composition on a surface of said inserted and fixed component (19).

13. Apparatus as claimed in Claim 12, **characterized in that** said spectroscopy tool (27) is mounted in a fixed position inside said machine tool (20).

14. Apparatus as claimed in Claim 12, **characterized in that** said machine tool (20) is equipped with a tool changer (29), and that said spectroscopy tool (27) is provided in said tool changer (29) of said machine tool (20).

## Patentansprüche

1. Verfahren zur Bearbeitung eines Bauteils (19) auf einer mehrachsigen Werkzeugmaschine (20), die mittels einer NC-Steuerung gesteuert wird, wobei das Verfahren folgende Schritte umfasst:
a) Einsetzen des Bauteils (19) in die Werkzeugmaschine (20);
b) Fixieren des Bauteils (19) an der Werkzeugmaschine (20), dergestalt, dass eine zu bearbeitende Fläche von einem Werkzeug der Werkzeugmaschine (20) erreichbar ist;
c) Abbilden der Materialzusammensetzung an der Oberfläche des eingesetzten und fixierten Bauteils (19) mittels eines spektroskopischen Werkzeugs (27);
d) Bestimmen von Bereichen (16, 17, 18) zum Abtragen oder Auftragen von Material auf das Bauteil (19) unter Berücksichtigung der abgebildeten Materialzusammensetzung;
e) Bestimmen eines Werkzeugweges zum Abtragen oder Auftragen von Material auf das Bauteil (19); und
f) Abtragen oder Auftragen von Material in den ermittelten Bereichen des Bauteils (19) entlang dem ermittelten Werkzeugweg mittels der Werkzeugmaschine (20).

2. Verfahren nach Anspruch 1, **dadurch gekennzeichnet, dass** für die Fläche des bearbeitenden Bauteils (19) ein Raster (31) mit einer Vielzahl definierter oder beliebiger Rasterpunkte (32) bereitgestellt wird und dass die Materialzusammensetzung des Bauteils (19) auf den Rasterpunkten (32) des Rasters (31) abgebildet wird.

3. Verfahren nach Anspruch 1, **dadurch gekennzeichnet, dass** der Schritt des Abtragens von Material von dem Bauteil (19) das Schleifen, Fräsen, Funkenerodieren (EDM) oder ein anderes materialabtragendes Verfahren umfasst.

4. Verfahren nach Anspruch 1, **dadurch gekennzeichnet, dass** der dass der Schritt des Auftragens von Material auf das Bauteil (19) das Laserauftragschweißen (LMF) oder ein anderes materialauftragendes Verfahren umfasst.

5. Verfahren nach Anspruch 2, **dadurch gekennzeichnet, dass** das Raster (31) mit der Vielzahl von Rasterpunkten (32) auf der Basis eines CAD-Modells des Bauteils (19) bestimmt wird.

6. Verfahren nach Anspruch 2, **dadurch gekennzeichnet, dass** das Raster (31) mit der Vielzahl von Rasterpunkten (32) auf der Basis eines Scan der Geometrie des Bauteils (19) bestimmt wird.

7. Verfahren nach Anspruch 1, **dadurch gekennzeichnet, dass** die Schritte (c) bis (f) mindestens einmal mit demselben oder einem anderen Werkzeug wiederholt werden.

8. Verfahren nach Anspruch 1, **dadurch gekennzeichnet, dass** das Bauteil (19) ein Teil einer Gasturbine ist.

9. Verfahren nach Anspruch 1, **dadurch gekennzeichnet, dass** das Bauteil (19) eine Turbinenschaufel (10) ist.

10. Verfahren nach Anspruch 1, **dadurch gekennzeichnet, dass** das spektroskopische Werkzeug (27) ortsfest im Innern der Werkzeugmaschine (20) untergebracht ist.

11. Verfahren nach Anspruch 1, **dadurch gekennzeichnet, dass** die Werkzeugmaschine (20) mit einem Werkzeugwechsler (29) ausgerüstet ist und dass das spektroskopische Werkzeug (27) in dem Werkzeugwechsler (29) der Werkzeugmaschine (20) untergebracht ist.

12. Vorrichtung zur Ausführung des Verfahrens nach einem der Ansprüche 1 bis 11, umfassend eine mehrachsige Werkzeugmaschine (20), die mittels einer NC-Steuerung gesteuert wird, mit Werkzeugen (30) zum Abtragen oder Auftragen von Material auf das in die Werkzeugmaschine (20) eingesetzte und fixierte Bauteil (19), **dadurch gekennzeichnet, dass** die Werkzeugmaschine (20) mit einem spektroskopischen Werkzeug (27) versehen ist, das dazu dient, die Materialzusammensetzung an einer Oberfläche des eingesetzten und fixierten Bauteils (19) abzubilden.

13. Vorrichtung nach Anspruch 12, **dadurch gekennzeichnet, dass** das spektroskopische Werkzeug (27) ortsfest im Innern der Werkzeugmaschine (20) untergebracht ist.

14. Vorrichtung nach Anspruch 12, **dadurch gekennzeichnet, dass** die Werkzeugmaschine (20) mit einem Werkzeugwechsler (29) ausgerüstet ist und dass das spektroskopische Werkzeug (27) in dem Werkzeugwechsler (29) der Werkzeugmaschine (20) untergebracht ist.

## Revendications

1. Procédé d'usinage d'un composant (19) sur une machine-outil multiaxe commandée par un contrôleur NC (20), comprenant les étapes ci-dessous consistant à :
a) insérer ledit composant (19) dans ladite machine-outil (20) ;
b) fixer ledit composant (19) dans ladite machine-outil (20) avec une surface à usiner accessible par un outil de ladite machine-outil (20) ;
c) cartographier la composition matérielle sur ladite surface dudit composant inséré et fixé (19) au moyen d'un outil de spectroscopie (27) ;
d) déterminer des zones (16, 17, 18) d'enlèvement de matière dudit, ou d'ajout de matière audit composant (19), eu égard à ladite composition matérielle cartographiée ;
e) déterminer un trajet d'outil pour l'enlèvement de matière dudit, ou l'ajout de matière audit composant (19); et
f) enlever de la matière dudit, ou ajouter de la matière audit composant (19) dans lesdites zones déterminées le long dudit trajet d'outil déterminé, au moyen de ladite machine-outil (20).

2. Procédé selon la revendication 1, **caractérisé en ce qu'**une trame (31) avec une pluralité de points de trame définis ou arbitraires (32) est fournie pour ladite surface dudit composant (19) à usiner, et **en ce que** ladite composition matérielle dudit composant (19) est cartographiée au niveau desdits points de trame (32) de ladite trame (31).

3. Procédé selon la revendication 1, **caractérisé en ce que** ladite étape d'enlèvement de matière dudit composant (19) comprend un processus parmi le meulage, le fraisage, l'usinage par électroérosion (EDM) ou un autre processus d'enlèvement de matière.

4. Procédé selon la revendication 1, **caractérisé en ce que** ladite étape d'ajout de matière audit composant (19) comprend un processus de formage de métaux au laser (LMF), ou un autre processus d'ajout de matière.

5. Procédé selon la revendication 2, **caractérisé en ce que** ladite trame (31) avec ladite pluralité de points de trame (32) est définie sur la base d'un modèle de conception assistée par ordinateur, CAD, dudit composant (19).

6. Procédé selon la revendication 2, **caractérisé en ce que** ladite trame (31) avec ladite pluralité de points de trame (32) est basée sur un balayage de la géométrie dudit composant (19).

7. Procédé selon la revendication 1, **caractérisé en ce que** les étapes (c) à (f) sont réexécutées au moins une fois avec le même outil ou avec un outil différent.

8. Procédé selon la revendication 1, **caractérisé en ce que** ledit composant (19) fait partie d'une turbine à gaz.

9. Procédé selon la revendication 8, **caractérisé en ce que** ledit composant (19) est une aube de turbine (10).

10. Procédé selon la revendication 1, **caractérisé en ce que** ledit outil de spectroscopie (27) est monté dans une position fixe dans ladite machine-outil (20).

11. Procédé selon la revendication 1, **caractérisé en ce que** ladite machine-outil (20) est équipée d'un changeur d'outils (29), et **en ce que** ledit outil de spectroscopie (27) est disposé dans ledit changeur d'outils (29) de ladite machine-outil (20).

12. Appareil destiné à mettre en oeuvre le procédé selon l'une quelconque des revendications 1 à 11, comprenant une machine-outil multiaxe commandée par un contrôleur NC (20) avec des outils (30) pour enlever de la matière d'un composant (19), ou ajouter de la matière à un composant (19), lequel est inséré et fixé dans ladite machine-outil (20), **caractérisé en ce qu'**un outil de spectroscopie (27) est disposé au niveau de ladite machine-outil en vue de cartographier la composition matérielle sur une surface dudit composant inséré et fixé (19).

13. Appareil selon la revendication 12, **caractérisé en ce que** ledit outil de spectroscopie (27) est monté dans une position fixe dans ladite machine-outil (20).

14. Appareil selon la revendication 12, **caractérisé en ce que** ladite machine-outil (20) est équipée d'un changeur d'outils (29), et **en ce que** ledit outil de spectroscopie (27) est disposé dans ledit changeur d'outils (29) de ladite machine-outil (20).
